# EUROPÄISCHE PATENTSCHRIFT

(11) **EP 0 987 478 B1**
(45) Veröffentlichungstag und Bekanntmachung des Hinweises auf die Patenterteilung: **08.10.2003**
(21) Anmeldenummer: 99105461.0
(22) Anmeldetag: 17.03.1999
(51) Int. Cl.: F16K 31/06, F16K 1/12

(54) **Elektromagnetisch betätigbares Ventil**
Electromagnetic valve
Soupape électromagnétique

(30) Priorität: 17.09.1998 DE 19842584
(43) Veröffentlichungstag der Anmeldung: 22.03.2000
(73) Patentinhaber: Müller, Friedrich, 74670 Forchtenberg (DE)
(72) Erfinder: Schulz, Bernd, 74360 Ilsfeld (DE)
(74) Vertreter: Patentanwälte Ruff, Wilhelm, Beier, Dauster & Partner

(56) Entgegenhaltungen:
- DE-U- 1 866 548
- US-A- 3 795 383
- US-A- 5 529 281

## Beschreibung

Die Erfindung geht aus von einem Ventil, das mit Hilfe eines Elektromagneten betätigt werden kann. Ein Beispiel für ein solches Ventil ist ein Koaxialventil, bei dem ein axial durchströmtes Rohr als Verschlusskörper dient.

Bei einem bekannten Koaxialventil (DE 1 866 548 U) ist mit dem Rohr ein dieses umgebender Anker verbunden. Um den Anker herum ist der Elektromagnet angeordnet. Der Arbeitsluftspalt des Elektromagneten ist unmittelbar außerhalb des Rohres dieses umgehend ausgebildet.

Der Erfindung liegt die Aufgabe zugrunde, ein elektromagnetisch betätigbares, einfach und kostengünstig herzustellendes Ventil bzw. einen Antrieb für ein solches Ventil zu schaffen, das erhöhte Hubkräfte und damit eine vergrößerte Hubarbeit ermöglicht.

Zur Lösung dieser Aufgabe schlägt die Erfindung ein Ventil mit den im Anspruch 1 genannten Merkmalen vor. Weiterbildungen der Erfindung sind Gegenstand von Unteransprüchen, deren Wortlaut ebenso wie der Wortlaut der Zusammenfassung durch Bezugnahme zum Inhalt der Beschreibung gemacht wird.

Durch das Verlagern des Luftspalts nach außen kann dieser an einer Stelle angeordnet werden, wo eine größere Querschnittsfläche für ihn zur Verfügung steht. Dadurch ist es möglich, den Querschnitt des Luftspalts zu vergrößern. Dies führt dazu, dass höhere Kräfte zur Bewegung des Ankers zur Verfügung stehen. Aufgrund der höheren Hubkräfte wird es möglich, auch eine erhöhte Hubarbeit zu leisten. Diese kann beispielsweise dazu verwendet werden, eine größere Zahl von Dichtungen anzuordnen. Die Herstellung vereinfacht sich in der Produktion, da die Vorgänge des Lötens und Schweißens wegfallen können. Es braucht kein Sondermaterial verwendet zu werden, so dass die Herstellung auch billiger sein kann.

Der Antrieb nach der Erfindung macht eine bessere Einflussnahme auf den Kraftverlauf während des Hubes möglich.

In Weiterbildung der Erfindung kann vorgesehen sein, dass der Elektromagnet einen zweiten Arbeitsluftspalt aufweisen kann, der dann in radialer Richtung zwischen dem Verschlusskörper und der Spule des Elektromagneten angeordnet ist. Selbst dann, wenn dieser zweite Arbeitsluftspalt in radialer Richtung nur relativ klein ausgebildet ist, dient er zusammen mit dem äußeren Luftspalt dazu, den Gesamtquerschnitt des Luftspalts zu vergrößern.

In Weiterbildung der Erfindung kann vorgesehen sein, dass der Anker mindestens teilweise die Längsschnittform eines doppelwandigen Zylinders aufweist. Zwischen den beiden Wänden des doppelwandigen Zylinders lässt sich die Spule des Elektromagneten unterbringen.

Insbesondere kann vorgesehen sein, dass das Joch des Elektromagneten mindestens teilweise als doppelwandiger Zylinder ausgebildet ist.

Besonders günstig ist es, wenn eine Stirnfläche des doppelwandigen Zylinders des Ankers und/oder des Jochs durch den Anker bzw. das Joch selbst gebildet wird.

Erfindungsgemäß kann vorgesehen sein, dass der außerhalb der Spule angeordnete Arbeitsluftspalt in axialer Richtung etwa an der gleichen Stelle angeordnet ist wie der radial innerhalb der Spule angeordnete Arbeitsluftspalt.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:
- Fig. 1: einen Längsschnitt durch ein Teil eines Koaxialventils;
- Fig. 2: eine der Fig. 1 entsprechende Darstellung bei einer zweiten Ausführungsform.

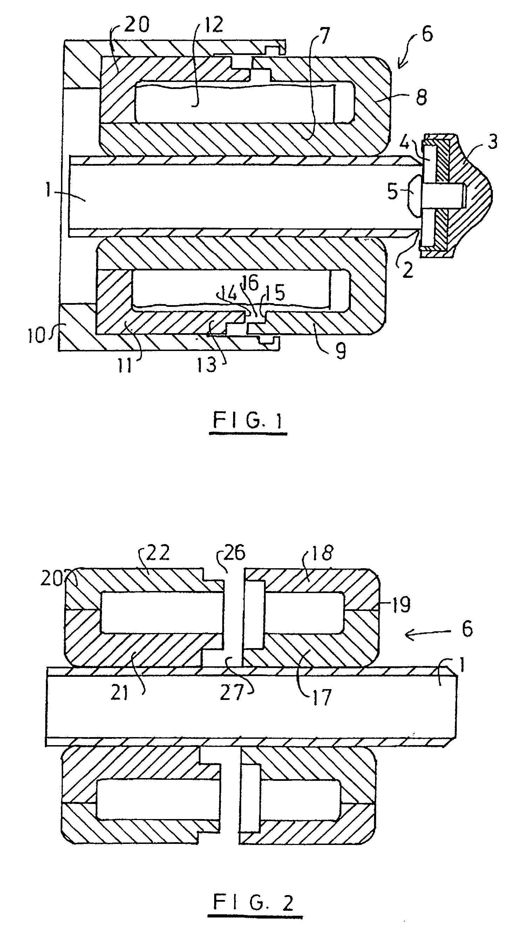

In Fig. 1 ist nur ein Teil eines Koaxialventils dargestellt, um die Erfindung übersichtlicher zu erläutern. Der eigentliche Verschlusskörper 1 des Koaxialventils ist ein Rohr, dessen eines Ende 2 eine scharfe Kante bildet. In der dargestellten Stellung liegt diese scharfe Kante 2 auf einem Ventilsitz 3 auf. Der Ventilsitz 3 ist in einem Gehäuse des Ventils feststehend angeordnet. Er enthält auf seiner dem Verschlusskörper 1 zugewandten Seite eine Dichtplatte 4, die mit Hilfe einer Schraube 5 an ihm festgeschraubt ist. Der Verschlusskörper 1 ist derart ausgebildet und angeordnet, dass er in seiner eigenen Längsrichtung bewegt werden kann. Seine Längsrichtung ist seine Achse, da es sich bei dem Rohr um ein geradliniges zylindrisches Rohr handelt. Die Flüssigkeit, deren Strömung durch das Ventil gesteuert werden soll, durchströmt den Verschlusskörper 1 axial.

Mit der Außenseite des Verschlusskörpers 1 ist ein Anker 6 verbunden, beispielsweise dadurch, dass er an der Außenseite des Verschlusskörpers befestigt ist. Der Anker 6 weist einen inneren Abschnitt 7 auf, der als Zylinder ausgebildet ist. An seinem einem axialen Ende ist der innere Abschnitt 7 des Ankers 6 durch eine Ringscheibe 8 mit einem äußeren Abschnitt 9 des Ankers 6 verbunden. Die Ringscheibe 8 liegt in einer Ebene senkrecht zu der Achse und damit zu der Bewegungsrichtung des Verschlusskörpers 1.

Der äußere Abschnitt 9 des Ankers 6 bildet ebenfalls einen Zylinder, der koaxial zu dem inneren Abschnitt 7 verläuft.

In einem nur angedeuteten Teil 10 des Ventilgehäuses ist das Joch 11 eines Elektromagneten befestigt. Der Elektromagnet enthält eine Spule 12, deren Wicklungen um die Achse des Verschlusskörpers 1 herum gewickelt sind. Die Spule 12 ist in radialer Richtung zwischen dem inneren Abschnitt 7 des Ankers 6 und dem äußeren Abschnitt 9 des Ankers 6 angeordnet. Ein Abschnitt 13 des Jochs 11 liegt in axialer Verlängerung zu dem äußeren Abschnitt 9 des Ankers 6. Zwischen dem freien Stirnende 14 des Jochs 11 und dem freien Ende 15 des Ankers ist ein Arbeitsluftspalt 16 gebildet. Dieser Arbeitsluftspalt 16 liegt in radialer Richtung außerhalb der Spule 12 des Elektromagneten. Im dargestellten Beispiel ist der Luftspalt durch zwei Stirnflächen 14, 15 begrenzt, die stufenartig ausgebildet sind.

Fig. 2 zeigt einen ähnlichen Schnitt durch eine zweite Ausführungsform, wobei aus Gründen der Vereinfachung der Ventilsitz nicht dargestellt ist. Wieder ist mit dem Verschlusskörper 1 ein Anker 6 verbunden, der einen inneren zylindrischen Abschnitt 17 und einen äußeren zylindrischen Abschnitt 18 aufweist. Die beiden Abschnitte 17 und 18 ergänzen sich zu einem doppelwandigen Zylinder, der stirnseitig durch eine Ringscheibe 19 abgeschlossen ist.

Das Joch 20 ist in dieser Ausführungsform ähnlich aufgebaut wie der Anker, also als doppelwandiger Zylinder mit einem inneren Abschnitt 21 und einem äußeren Abschnitt 22. Die freien Stirnenden der inneren bzw. äußeren Abschnitte 17, 21 bzw. 18, 22 bilden zwischen sich jeweils einen Luftspalt 26, 27. Die beiden sich um den Verschlusskörper 1 herum erstreckenden Luftspalte 27 und 26 bilden die Arbeitsluftspalte des Elektromagneten, der den Verschlusskörper 1 bewegt.

Die Spule 12 des Elektromagneten wird bei dieser Ausführungsform in dem Zwischenraum zwischen dem inneren und äußeren Abschnitt des Jochs und/oder des Ankers angeordnet.

Während bei der dargestellten Ausführungsform sowohl der Anker als auch das Joch aus jeweils zwei miteinander verpressten Teilen hergestellt dargestellt ist, ist es auch möglich und wird von der Erfindung bevorzugt, den Anker 6 und/oder das Joch 20 aus einem Stück bestehend herzustellen.

Das von der Erfindung vorgeschlagene Ventil ermöglicht wegen der Vergrößerung des Arbeitsluftspalts in einer Richtung quer zu der Bewegungsrichtung des Ankers vergrößerte Kräfte. Die vergrößerten Kräfte, die eine vergrößerte Hubarbeit bedeuten, können zu unterschiedlichen Zwecken ausgenutzt werden. So ist es beispielsweise möglich, ein Ventil für höhere Drücke auszulegen.

Ebenfalls möglich ist es, die erhöhten Kräfte dazu zu verwenden, die durch die Benutzung von mehr Dichtungen erhöhten Reibungskräfte zu überwinden.

Eine weitere Möglichkeit besteht darin, mit höheren Dichtkräften zu arbeiten, d. h., das Verschlusselement mit höherer Dichtkraft auf den Ventilsitz in geschlossenem Zustand des Ventils anzulegen. Dadurch kann man mit verschleißfesteren Dichtungen arbeiten. Dies erhöht natürlich die Lebensdauer des Ventils.

## Patentansprüche

1. Magnetisch betätigbares Ventil, insbesondere Koaxialventil, mit
1.1 einem bewegbaren Verschlusskörper (1),
1.2 einem Elektromagneten,
1.2.1 dessen Spule (12) ein mit dem Verschlusskörper verbundenes Betätigungselement umgibt,
1.3 einem Anker (6), der
1.3.1 das Betätigungselement umgibt,
1.3.2 an diesem befestigt ist und
1.3.3 durch das Magnetfeld des Elektromagneten zusammen mit dem Verschlusskörper (1) bewegbar ist, sowie mit
1.4 einem Joch (11; 20) und mindestens einem Luftspalt (16; 26) zwischen Joch und Anker,
**dadurch gekennzeichnet, daß** der mindestens eine Luftspalt (16; 26) in radialer Richtung außerhalb der Spule (12) des Elektromagneten angeordnet ist.

2. Ventil nach Anspruch 1, mit einem zweiten Luftspalt (27), der zwischen dem Verschlusskörper (1) und der Spule (12) des Elektromagneten angeordnet ist.

3. Ventil nach Anspruch 1 oder 2, bei dem der Anker (6) mindestens teilweise als doppelwandiger Zylinder ausgebildet ist.

4. Ventil nach Anspruch 3, bei dem der doppelwandige Zylinder stirnseitig geschlossen ist.

5. Ventil nach einem der vorhergehenden Ansprüche, bei dem das Joch (20) des Elektromagneten mindestens teilweise als doppelwandiger Zylinder ausgebildet ist.

6. Ventil nach Anspruch 5, bei dem der doppelwandige Zylinder stirnseitig geschlossen ist.

7. Ventil nach einem der Ansprüche 2 bis 6, bei dem der äußere Luftspalt (26) und der innere Luftspalt (27) in axialer Richtung des Verschlusskörpers (1) etwa an der gleichen Stelle angeordnet sind.

8. Ventil nach einem der vorhergehenden Ansprüche, bei dem das Betätigungselement ein Teil des Verschlusskörpers (1) ist, insbesondere einstückig mit diesem ausgebildet.

## Claims

1. A magnetically actuatable valve, in particular, a coaxial valve, having
1.1 a movable valve closing member (1),
1.2 an electromagnet
1.2.1 whose coil (12) surrounds an actuating element that is fastened to the valve closing member (1),
1.3 an armature (6) that
1.3.1 surrounds the actuating element,
1.3.2 is fastened to the latter, and,
1.3.3 together with valve closing member (1), may be moved by the magnetic field of the electromagnet, along with
1.4 a yoke (11; 20) and at least one air gap (16; 26) between the yoke and the armature,
**characterized in that** the at least one air gap (16;26) is radially arranged outside the coil (12) of the electromagnet.

2. A valve according to claim 1 having a second air gap (27) that is arranged between the valve closing member (1) and the coil (12) of the electromagnet.

3. A valve according to claim 1 or claim 2, wherein the armature (6) is at least partially configured in the form of a double-walled cylinder.

4. A valve according to claim 3, wherein the double-walled cylinder is closed on one end.

5. A valve according to any of the foregoing claims, wherein the yoke (20) of the electromagnet is at least partially configured in the form of a double-walled cylinder.

6. A valve according to claim 5, wherein the double-walled cylinder is closed on one end.

7. A valve according to any of claims 2 - 6, wherein the outer air gap (26) and inner air gap (27) are arranged at about the same location along the axis of the valve closing member (1).

8. A valve according to any of the foregoing claims, wherein the actuating element is part of the valve closing member (1), in particular, forms a single, monolithic unit therewith.

## Revendications

1. Soupape actionnée par aimant, en particulier soupape coaxiale, avec
1.1 un corps de fermeture (1) mobile,
1.2 un électroaimant,
1.2.1 dont la bobine (12) entoure un élément d'actionnement relié au corps de fermeture,
1.3 une ancre (6), qui
1.3.1 entoure l'élément d'actionnement,
1.3.2 est fixée à celui-ci et
1.3.3 qui, en raison du champ magnétique de l'électroaimant, est mobile avec le corps de fermeture (1), ainsi qu'avec
1.4 une culasse (11 ; 20) et au moins une fente d'air (16 ; 26) entre culasse et ancre, **caractérisée en ce que** la fente d'air - au minimum une - (16 ; 26) est disposée dans le sens radial à l'extérieur de la bobine (12) de l'étectroaimant.

2. Soupape selon la revendication 1, avec une seconde fente d'air (27) disposée entre le corps de fermeture (1) et la bobine (12) de l'électroaimant.

3. Soupape selon la revendication 1 ou 2, sur laquelle l'ancre (6) est conçue au moins en partie en tant que cylindre à double paroi.

4. Soupape selon la revendication 3, sur laquelle le cylindre à double paroi est fermé sur le côté frontal.

5. Soupape selon l'une des revendications précédentes, sur laquelle la culasse (20) de l'électroaimant est conçue au moins en partie en tant que cylindre à double paroi.

6. Soupape selon la revendication 5, sur laquelle le cylindre à double paroi est fermé sur le côté frontal.

7. Soupape selon l'une des revendications 2 à 6, sur laquelle la fente d'air extérieure (26) et la fente d'air intérieure (27) sont disposées dans le sens axial du corps de fermeture (1) approximativement au même endroit.

8. Soupape selon l'une des revendications précédentes, sur laquelle l'élément d'actionnement est une partie du corps de fermeture (1), formé en particulier d'une seule pièce avec celui-ci.
